# EUROPEAN PATENT SPECIFICATION

(11) **EP 3 239 118 B1**
(45) Date of publication and mention of the grant of the patent: **31.03.2021**
(21) Application number: 15873128.1
(22) Date of filing: 24.12.2015
(51) Int. Cl.: C05D 3/00, C05G 1/00, C01F 11/46

(54) **USE OF GYPSUM FERTILIZER FOR BLUEBERRIES AND METHOD FOR SUPPRESSING BLUEBERRY ABSCISSION**
VERWENDUNG VON GIPSDÜNGEMITTEL FÜR HEIDELBEEREN UND VERFAHREN ZUR UNTERDRÜCKUNG DES ABFALLENS VON HEIDELBEEREN
UTILISATION D'UN ENGRAIS DE GYPSE POUR LES MYRTILLES ET PROCÉDÉ POUR EMPÊCHER L'ABSCISSION DES MYRTILLES

(30) Priority: 26.12.2014 JP 2014265527
(43) Date of publication of application: 01.11.2017
(73) Proprietor: Yoshino Gypsum Co., Ltd., Tokyo 100-0005 (JP)
(72) Inventor: SUGANO Kenichi, Tokyo 100-0005 (JP); MIURA Shinichi, Tokyo 100-0005 (JP); ICHINO Yusuke, Tokyo 100-0005 (JP); OBI Yositosi, Hokuto-shi Yamanashi 408-0021 (JP)
(74) Representative: Blodig, Wolfgang
(86) International application number: PCT/JP2015/085932
(87) International publication number: WO 2016/104560

(56) References cited:
- WO-A1-2013/096849
- FR-A1- 2 612 812
- JP-A- 2009 529 019
- KR-A- 20030 062 520
- US-A- 3 660 068
- US-A- 4 954 134
- SANDERSON, K. R. ET AL.: 'Effects of gypsum on yield and nutrient status of native lowbush blueberry' CANADIAN JOURNAL OF PLANT SCIENCE vol. 76, no. 2, 01 January 1996, pages 361 - 366, XP055460026

## Description

### Technical Field

The present invention relates to the use of a gypsum fertilizer for preventing abscission of blueberries which exhibits an effect of preventing abscission of blueberry fruits when applied and a method for suppressing blueberry abscission using the same.

### Background Art

A blueberry is a small fruit tree that belongs the genus Vaccinium of the family Ericaceae and has been used as a food since old times. Especially, since the beginning of the 20th century, a lot of varieties have been produced by breed improvement as a fruit tree through hybridization among the Highbush family, the Rabbiteye family, the Half-highbush family, and the Lowbush family blueberries. At present, the blueberry includes several-hundred varieties, and has become a fruit tree that is widely planted in temperate zones in the world and is widely used as a food. In recent years, efforts to make the fruits large have been made as the demand increases. The blueberry is a plant that is acidophilic and ammoniaphilic and grows on acidic soil, which is different from other fruit trees. Therefore, the blueberry is generally cultivated on strongly acidic soil, for example, with a pH of about 4.3 to about 4.8 for the Highbush family blueberries and a pH of about 4.2 to about 5.3 for the Rabbiteye family blueberries using an organic material called peat moss the acidity of which is not adjusted.

It is generally considered that the major five elements of a fertilizer, the elements consisting of nitrogen (N), phosphoric acid (P), potassium (K), which are three major elements of a fertilizer, calcium (Ca) and magnesium (Mg), are necessary in growing a plant. On the other hand, the blueberry is grown on acidic soil as described above, and therefore the fertilizers to be used for blueberries are different from the above-described general fertilizers in the following point. It is general that the Ca component is not particularly applied as a fertilizer in blueberry orchards as described in, for example, Non Patent Literature 1 which describes that "the growth of a blueberry tree is excellent on acidic soil, therefore, in fact, Ca is not applied as a fertilizer in blueberry orchards, and a Ca deficiency symptom is seldom observed in blueberry orchards. On the other hand, when the content of Ca in soil becomes large, the pH of soil becomes high to cause iron deficiency." or "The required amount of bases, such as Ca and Mg particularly, which are inferior in solubility in acidic soil is small.".

Moreover, the blueberry has a strong tolerance to a high concentration of aluminum (Al), iron (Fe), or manganese (Mn) eluting from acidic soil and tends to have a preference for ammonia nitrogen (NH₄-N) that stably exists in the acidic soil. Therefore, the nitrogen (N) component is more often applied as a fertilizer to the blueberry in a form of ammonia nitrogen than in a form of nitrate nitrogen (NO₃-N).

On the other hand, there is a problem of abscission as an inevitable problem in the blueberry that bears a lot of fruits. Specifically, the problem includes: so-called "physiological abscission" in which the abscission of fruits in an immature state occurs to self-control the number of fruits to be born depending on the tree vigor;
"natural abscission" that occurs when the degree of ripeness has excessively progressed; and
"abscission" in which abscission of ripened fruits occurs before harvest due to an influence of wind or the like. Particularly, the abscission of ripened fruits not only causes the reduction in crop yield but also causes the following new problems when the fruits are left as they are in a fallen state. That is, there is a risk that harmful insects such as fruit flies rally to the tree due to the odor of the corrupt fruits and lay eggs into fruits before harvest which are not fallen to cause a vicious circle in which the crop yield is further reduced because the fruits in which eggs are laid cannot be also harvested. Therefore, it must be avoided to leave the fallen fruits as they are, and the fallen fruits need to be collected as soon as possible. In this regard, the blueberry fruits are easily scratched, and therefore the harvest of the blueberry is conducted in such a way that small fruits are handpicked while checking the degree of ripeness, which is a major burden on producers because such harvest requires a lot of labor, and, on top of that, collection of the fallen fruits and dispose of collected fruits must be done frequently. Particularly, the "natural abscission" of the blueberry and the "abscission" of the blueberry in which abscission of ripened fruits occurs before harvest due to an influence of wind or other reasons are important problems which are directly linked to the reduction in crop yield. In addition to this, as described above, the collection of the fallen fruits forces excessive labor on producers, and the reduction in productivity caused by these has become a major problem.

The problem of the abscission of fruits is not limited to blueberries. For example, apples and pears which are large-sized fruits require a lot of days to be harvested, and the influence of the abscission of ripened fruits before harvest on economic loss is larger than in the case of blueberries. To deal with the problem, abscission inhibitors targeting apples or pears are sold and widely used. The abscission inhibitor used for the purpose is a plant hormone agent classified as a plant growth regulator. The plant growth regulator is usually diluted with water for use by spraying the diluted solution. However, it is known that beneficial effects and harmful effects of a plant regulator are liable to be affected by the spray condition, so that the use of the plant regulator requires skill
The use of granulated gypsum as fertilizer is known from US 3 660 068, FR 2 612 812 A1, US 4 954 134 A and KR 2003 0062520 A.

### Citation List

### Non Patent Literature

Non Patent Literature 1: Basics of Blueberry Production (pp. 101-110, Yokendo Co., Ltd., 2008)

### Summary of Invention

### Technical Problem

As described above, regarding the problem of the abscission of large-sized fruits such as apples and pears, the measure is taken by the abscission inhibitor although the use of the abscission inhibitor requires skill. The abscission inhibitor can be applied to individual fruits, and the effect has been obtained. However, it is not realistic to apply the abscission inhibitor to the blueberry because of the characteristic of the fruit as will be described below even though it is assumed that the abscission inhibitor sold for large-sized fruits also exhibits beneficial effects to the blueberry which is a small-sized fruit. That is, the blueberry bears 5 to 10 fruits in a cluster of flowers although the fruits have been made large in recent years, and it takes 4 to 6 weeks until all the fruits in a cluster of flowers matures. Therefore, the blueberry fruits cannot be harvested all at once for every cluster of flowers, and are harvested in the order of ripening. This means that spraying the abscission inhibitor which is a plant hormone preparation classified as a plant growth adjuster to a cluster of flowers one by one all at once causes trouble. Therefore, regarding the blueberry abscission, the present circumstance is that the measure to resolve the problem depends on the efforts of producers, such as harvest before wind blows, collection of fallen fruits as soon as possible, and devising a method to make the collection easy.

Moreover, various studies have been conducted on the "natural abscission" that occurs because the degree of ripeness has excessively progressed and that is directly linked to productivity. For example, it has been found that the time when the natural abscission occurs is different depending on the variety of blueberries, and attempts to lower the rate of fallen fruits by the selection of varieties have been conducted. However, the selection of varieties that are more suitable for enabling the reduction in the rate of fallen fruits requires a detailed study on the rate of fallen fruits of the blueberry, which has a lot of varieties, considering the taste and the climate of cultivation areas, which is not easy.

Based on such a background, the present inventors have recognized that it is very useful that the abscission of blueberry fruits can be suppressed by only applying a solid fertilizer to the root of a fruit tree, the solid fertilizer: being different from the plant hormone preparation classified as a plant growth adjuster and used as an abscission inhibitor for apples and pears which are large-sized fruits; and not accompanying spraying that requires skill. That is, it is extremely useful that a fertilizer that can effectively prevent the abscission of blueberry fruits and that is suitable and useful for blueberry fruits having the above-described characteristic is developed. Specifically, when the complexity that occurs in spraying an abscission inhibitor to apples or pears does not exist, the problem of harmful effects to be apprehended in using a plant hormone preparation does not exist, an increase in crop yield can be achieved, and the reduction of time and labor for collecting fallen fruits can be achieved with a fertilizer, the fertilizer has a high practical value because the labor of producers can be reduced and an improvement in the productivity can be achieved.

Accordingly, the object of the present invention is to provide an excellent fertilizer that can suppress the abscission of blueberry fruits without adversely affecting the growth of the blueberry fruits.

### Solution to Problem

The object can be achieved by the following present invention. The present invention relates to the subject matter of claims 1 to 10. That is, the present invention provides the use of a gypsum fertilizer for suppressing abscission of blueberries, the fertilizer containing gypsum having a BSA specific surface area of 15000 cm²/g or less as a main component. In addition, gypsum as a fertilizer is designated as one of the special fertilizers based on the Fertilizers Regulation Act, and in the Fertilizers Regulation Act, the gypsum is defined as "Gypsum (limited to gypsum by-produced during production of phosphoric acid)". However, gypsum from which remarkable effects according to the present invention are obtained is not limited to the gypsum as designated in the Fertilizers Regulation Act. That is, the gypsum that constitutes a gypsum fertilizer used according to the present invention is not limited to the gypsum as designated in the Fertilizers Regulation Act, but includes natural gypsum, other by-product gypsum, and the like.

The preferred embodiments according to the present invention include the following. The BSA specific surface area is 8000 cm²/g or less; the BSA specific surface area is 5000 cm²/g or less; the BSA specific surface area is 1500 cm²/g or less; a material that contains at least one component selected from the group consisting of a nitrogen component, a phosphoric acid component, a potassium component, and an iron component is further contained; the phosphoric acid component is at least one selected from the group consisting of orthophosphoric acid, polyphosphoric acid, phosphorous acid, and salts thereof; the material that contains at least one component selected from the group consisting of a nitrogen component, a phosphorus component, a potassium component, and an iron component is contained in a ratio of 0.1 to 20 parts by mass based on 100 parts by mass of the gypsum; the gypsum is phosphogypsum; and the gypsum is dihydrate gypsum.

The present invention provides as another embodiment a method for suppressing the abscission of blueberry fruits, the method fertilizing soil with any one of the above-described gypsum fertilizers for blueberries.

### Advantageous Effects of Invention

According to the present invention, an excellent gypsum fertilizer can be provided with which an effect of suppressing abscission of blueberry fruits can be recognized for any of the varieties without adversely affecting the growth of the blueberry fruits. According to the gypsum fertilizer used in the present invention with which the excellent effect can be obtained, the abscission of blueberry fruits can be suppressed, not only the crop yield is increased but also the number of fallen fruits is reduced, and therefore time and labor for collecting fallen fruits can be reduced.

### Description of Embodiments

Hereinafter, the present invention will be described in more detail giving preferred embodiments. The details about how the present inventors have reached the present invention is first described.

The present inventors have decided to conduct a study focusing on finding an efficient fertilizer component that can suppress the abscission of blueberry fruits in suppressing the abscission of blueberry fruits which is the problem of the conventional technique using a fertilizer. In the study, the present inventors have questioned about the description that "the growth of a blueberry tree is excellent on acidic soil, therefore the required amount of bases, such as Ca and Mg, which are inferior in solubility in soil is small. On the contrary, when the content of calcium (Ca) in soil becomes large, the pH of soil becomes high to cause iron deficiency.", particularly about the description that "the required amount of ... Ca is small for the growth of the blueberry." from the following reason.

That is, the present inventors have focused on the fact that the amount of calcium (Ca) contained in 100 g of blueberry fruits is about the same as that of phosphorus (P) (refer to STANDARD TABLES OF FOOD COMPOSITION IN JAPAN Fifth Revised and Enlarged Edition). As described above, it is considered that the necessity of applying the calcium component as a fertilizer is small in growing a blueberry; however, the present inventors have conceived an idea that it is effective to apply as a fertilizer the calcium (Ca) component as well as the phosphorus (P) component in consideration of the fact that the amount of phosphorus (P) and the amount of calcium (Ca) contained in the fruit are about the same. The present inventors have considered that the calcium component contained in the whole tree is absorbed in the fruit part to make the calcium component deficient in the parts other than the fruit part, causing the blueberry abscission as a factor together with the trend of making the fruits large in recent years, and thus the present inventors have conducted various studies.

From the above-described facts, the present inventors have built a hypothesis that the calcium component is essential for growing blueberries, and have conducted studies on the fertilizer containing a calcium component. As mentioned previously, the blueberry has a preference for acidic soil (pH of 4 to 5), and therefore the use of a calcium fertilizer such as slaked lime is not preferable. Thus, detailed studies on whether an effect of suppressing the blueberry abscission is exhibited or not have been conducted using a fertilizer containing as a main component gypsum that is a neutral substance. As a result, it has been found that there is a tendency that the blueberry abscission is suppressed by the use of the fertilizer containing gypsum as a main component. As a result of further studies, it has been found that the effect of suppressing the blueberry abscission becomes more remarkable by applying, among others, a gypsum fertilizer containing gypsum in which the BSA specific surface area is controlled in a certain value or less.

That is, it is considered that when the gypsum fertilizer containing gypsum which is a neutral substance and in which the BSA specific surface area specified in the present invention is controlled in a certain value or less is applied to the acidic soil, the activity of calcium (Ca) is appropriately suppressed and the calcium is favorably absorbed to make the calcium component sufficient in any of the tree and the fruits of the blueberry, so that suppression of the abscission can be achieved without adversely affecting the growth of the fruits. According to studies conducted by the present inventors, the following compositions are further preferable. Specifically, the composition of the gypsum fertilizer may further contain at least one component selected from the group consisting of a nitrogen component, a phosphoric acid component, a potassium component, and an iron component, and more preferably the composition of the gypsum fertilizer may contain 0.1 to 20 parts by mass of a material containing these components based on 100 parts by mass of the gypsum. Moreover, in the case where the phosphoric acid component is contained, it is preferable to use the phosphoric acid component selected from the group consisting of orthophosphoric acid, polyphosphoric acid, phosphorous acid, and salts thereof. As the gypsum, it is preferable to use phosphogypsum. More preferably, dihydrate gypsum may be used as the gypsum.

Hereinafter, materials that constitute the gypsum fertilizer for blueberries used according to the present invention will be described individually in detail.

First, quick lime (calcium oxide), slaked lime (calcium hydroxide), or the like is generally used in a fertilizer containing a calcium (Ca) component; however, these exhibit a strong alkalinity in soil. Therefore, in the case where a fertilizer containing a calcium (Ca) component is used as a fertilizer for a plant that grows on acidic soil, it has been required to use the fertilizer in a range that does not make the pH value of the soil high or to use a component that exhibits acidity in the soil together with the calcium (Ca) component. On the other hand, gypsum is neutral in soil and is preferable in the case where the calcium (Ca) component is added to blueberries that grow on the acidic soil. However, it has been considered that the calcium component is not particularly necessary for cultivating blueberries, but rather considered that the required amount is low as mentioned previously. In fact, Ca has not been applied as a fertilizer in blueberry orchards, and it has been considered that a Ca deficiency symptom is seldom observed in blueberry orchards.

Facing the above-described present circumstances, the usefulness of the gypsum fertilizer has been found in the present invention from the new standpoint of suppressing the blueberry abscission as mentioned previously. It has been found that a gypsum fertilizer containing gypsum having a BSA specific surface area of 15000 cm²/g or less is necessary for stably and surely obtaining an effect in terms of suppressing the blueberry abscission. Moreover, it has been confirmed that it is useful to prepare a gypsum fertilizer containing gypsum having a BSA specific surface area of preferably 8000 cm²/g or less, more preferably 5000 cm²/g or less, and still more preferably 1500 cm²/g or less. The BSA specific surface area of the gypsum used in the present invention is a value measured in accordance with Test of specific surface area by Blaine air permeability method specified in JIS R 5201 (Physical testing methods for cement).

It is generally said as follows with respect to the correlation among respective nutrients for a plant. First, it is considered that calcium tends to inhibit absorption of nitrogen (N) and potassium (K), and it is considered that when calcium becomes excessive, there is a risk that the calcium inhibits absorption of a phosphoric acid (P) component and an iron (Fe) component. Of course, nitrogen, phosphoric acid, and potassium are important in growing blueberries; however, when the ion (Fe) component is deficient, the growth of blueberries is inhibited. On the other hand, according to studies conducted by the present inventors, the inhibition of the growth of blueberries has not been recognized when the gypsum fertilizer used according to the present invention is applied to the blueberries although the gypsum fertilizer used according to the present invention contains gypsum as a main component and calcium, and an effect of suppressing the blueberry abscission, the effect being the object of the present invention, is newly obtained. From these facts, it is inferred that when the calcium component is applied as a fertilizer using gypsum and the composition in which the BSA specific surface area of the gypsum is controlled in a certain value or less is prepared as specified in the present invention, the inhibition of absorption of the other nutrients by calcium can be prevented, and, as a result, the growth of the blueberries has not been inhibited, and these facts further show that the achievement of a new effect of "suppressing the blueberry abscission" has been made possible.

As the kind of gypsum that constitutes the gypsum fertilizer for blueberries used according to the present invention, any kind of publicly known gypsum can be used; however, it is preferable to use phosphogypsum. It is further preferable to use dihydrate gypsum. The reason is that dihydrate gypsum has a relatively low solubility, and therefore excess of calcium hardly occurs, so that there is no possibility that the growth of a root is inhibited due to the strength development by the self-hardening property.

Moreover, the gypsum fertilizer for blueberries used according to the present invention can be used without problem whatever the shape as a fertilizer may be as long as the BSA specific surface area of the gypsum which is contained therein is satisfied as described above. Accordingly, the shape at the time of applying the fertilizer is not particularly limited; however, it is preferable to apply, for example, the fertilizer in a powder form, or the fertilizer in a particle form or a granular form obtained by converting the fertilizer in a powder form. The powder here means a powder having an average particle diameter of 200 µm or less. The "average particle diameter" in the present specification means a volume average diameter (MV) that is measured using a particle size distribution-measuring apparatus making use of a laser diffraction/scattering method. According to studies conducted by the present inventors, when the shape of the gypsum fertilizer for blueberries used according to the present invention is made in a particle form or a granular form by converting the fertilizer in a powder form, the gypsum which is contained in the fertilizer can easily be made to satisfy the BSA specific surface area as specified in the present invention. Accordingly, the gypsum fertilizer for blueberries used according to the present invention in a particle form or a granular form obtained by converting the fertilizer in a powder form is preferable. Particularly, a handling property during the application of the fertilizer is improved by preparing the fertilizer in a particle form or a granular form. Furthermore, in addition to such an advantage, the particle or granule is easily collapsed due to moisture in soil or a rainfall after the application of the fertilizer, and therefore there is also an advantage that the fertilizer can sufficiently be dispersed into soil and the fertilizer is applied in a favorable state. In the case where the shape of the gypsum fertilizer for blueberries used according to the present invention is made in a particle form or a granular form, the fertilizer having the shape can easily be obtained by supplying a swellable clay mineral such as, for example, gypsum or bentonite to a granulator, if necessary, after mixing an organic substance-containing granulating auxiliary such as a lignin sulfonate with the fertilizer to conduct size enlargement.

In addition to the gypsum component described above, the gypsum fertilizer for blueberries used according to the present invention may further contain as an additive a material containing at least one component selected from a nitrogen (N) component, a phosphoric acid (P) component, a potassium (K) component, and an iron (Fe) component. The amount of the additive to be added is not particularly limited; however, it is preferable that the amount be in a range of, for example, about 0.1 to about 20 parts by mass based on 100 parts by mass of the gypsum.

Particularly, the phosphoric acid (P) component contained in a blueberry fruit is about the same as the calcium (Ca) component contained in a blueberry fruit, and therefore the present inventors consider that the appropriate balance of the amount of the calcium (Ca) component and the phosphorus (P) component in the gypsum fertilizer used according to the present invention is further preferable because each of the components helps the absorption of the other. As the phosphoric acid (P) component for use in the present invention, orthophosphoric acid, polyphosphoric acid or phosphorous acid may be used, or a salt thereof may be used.

In the case where the potassium (K) component is contained as the additive and as a constituent of the gypsum fertilizer for blueberries used according to the present invention, since the growth of a blueberry is excellent on acidic soil as described previously, it is necessary to take notice of the addition of the potassium (K) component so that the soil may not have basicity when the fertilizer is applied. Therefore, in the case where the potassium (K) component is contained in the gypsum fertilizer for blueberries used according to the present invention, it is desirable to add the potassium (K) component together with the phosphorus (P) component. As the potassium component, potassium salts such as potassium sulfate and potassium chloride are preferable.

Moreover, in the case where the nitrogen (N) component is used as the additive, since the blueberry has a preference for the ammonia-nitrogen as mentioned previously, it is preferable to contain the nitrogen (N) component in a form of ammonia, and the nitrogen (N) component may be an ammonium salt.

Further, the growth of blueberries is inhibited when the iron (Fe) component is deficient as described above, and therefore it is particularly preferable to add the iron (Fe) component among the additives in advance in the case where the calcium (Ca) component is relatively excessive in the gypsum fertilizer for blueberries used according to the present invention.

Furthermore, the amount of the gypsum fertilizer for blueberries used according to the present invention to be applied is different depending on the variety of blueberries, the age of a tree, the climate condition, and the soil environment to be used and is not particularly limited. It is preferable that the amount be, for example, about 10 to about 200 Kg based on 10 a (1000 m²) of the cultivation area. Moreover, the timing of applying the fertilizer is also different depending on the variety of blueberries, the age of a tree, the natural features and environment to be used and is not particularly limited. However, the object of the present invention is to prevent abscission, and therefore it is preferable to apply the fertilizer after flower setting at the earliest.

The gypsum fertilizer for blueberries used according to the present invention can be used together with another chemical fertilizer. Regarding the application of the chemical fertilizer, the kind and amount of the chemical fertilizer to be applied are different depending on the variety, the age of a tree, the climate condition, and the soil condition and are not particularly limited, and it is preferable to use the chemical fertilizer appropriately. In general, the number of applying a fertilizer for blueberries is basically four times a year three years or later after planting, and it is often the case that the fertilizer is first applied immediately before bud flush, then topdressing is conducted twice in an interval of 6 to 7 weeks, and topdressing after harvest is conducted after harvesting fruits. Moreover, it is often the case that about 20 to about 25% of the amount of the fertilizer to be applied in a year is applied every time topdressing is conducted, and in an adult tree stage (6 to 8 years or later after planting nursery tree) during which fruit yield and quality becomes stable, about 7 to about 35 kg/10 a (1000 m²) of a chemical fertilizer which contains 8% of nitrogen (N), 8% of phosphoric acid (P), and 8% of potassium (K) are generally applied every time topdressing is conducted although that depends on the growth state.

The gypsum fertilizer for blueberries used according to the present invention having the composition and effects as described above can be used for not only blueberries but also fruits and crops which have a preference for acidic soil and for which a calcium fertilizer such as slaked lime has not been able to be used. Moreover, by applying the present invention to fruits for which calcium has been so far considered not to be required much, there is a possibility that the effect of achieving the suppression of abscission of the fruits without adversely affecting the growth of the fruits can be expected.

### Examples

Hereinafter, Examples and Comparative Example for further describing the present invention will be shown. However, the present invention is not limited to these Examples .

### [Examples 1 to 4 and Comparative Example]

The rate of fallen fruits (%) of a blueberry was measured for Examples where a gypsum fertilizer having a composition used according to the present invention was applied in addition to a chemical fertilizer and for Comparative Example where a gypsum fertilizer was not applied in applying a fertilizer to blueberry trees to confirm the superiority shown as a result of applying the gypsum fertilizer used according to the present invention. In addition, all the gypsum fertilizers used were obtained by converting a powder to a granule.

Specifically, three trees of a blueberry (variety: Emerald, Southern highbush family) in about the same growth state were each cultivated with a pot for Examples and Comparative Example under the same condition except that the applied fertilizer was changed, and the number of born fruits and the number of fallen fruits were measured to determine the rate of fallen fruits for each pot.

Fertilizers were each applied as described previously regarding the amount of a fertilizer applied and the method for applying the fertilizer. In conducting the first topdressing, each fertilizer having the composition as shown in Table 1 was applied so that the amount of dihydrate gypsum was 80 kg per 10 a (1000 m²) in addition to a usual chemical fertilizer in Examples 1 to 4. Further, in these Examples, phosphoric acid (orthophosphoric acid) was added so that the amount might be 5% based on 100 parts by mass of the dihydrate gypsum. As the chemical fertilizer, a chemical fertilizer containing 8% of nitrogen (N), 8% of phosphorus (P), and 8% of potassium (K) was used and applied so that the amount might be 25 Kg per 10 a (1000 m²). Moreover, in Comparative Example, only the usual chemical fertilizer was applied in the same amount as in Examples in conducting the first topdressing.

The rate (%) of fallen fruits in Table 1 was obtained in a manner as described below. The average number of born fruits per one pot in Examples 1 to 4 and Comparative Example was determined by counting the number of born fruits for each of three pots in Examples 1 to 4 and Comparative Example. Moreover, the number of fallen fruits was counted once every other day for each pot, and the counting was continued to the proper time of harvest to determine the cumulative number of fallen fruits for each pot, so that the average cumulative number of fallen fruits per one pot in Examples 1 to 4 and Comparative Example was determined. Percentages were calculated in such a way that a value obtained by dividing the average cumulative number of fallen fruits per one pot by the average number of born fruits per one pot, which was obtained in a manner as described above, was multiplied by 100. The percentages are shown in Table 1.

The BSA specific surface area of the gypsum used in Examples was measured by Test of specific surface area by Blaine air permeability method specified in JIS R 5201 (Physical testing methods for cement). As the specific measurement method, a gypsum powder was filled in a cell whose volume was already-known, and the permeation time of air was measured at a constant amount of air and a constant pressure difference to compare the permeation time for the standard cement, so that the specific surface area of each powder was measured.

**Table 1: Composition of fertilizers of Examples and Comparative Example and evaluation results**

| | Chemical fertilizer | Ca component | | Phosphoric acid (%) based on 100 parts of gypsum | Rate (%) of fallen fruits |
|---|---|---|---|---|---|
| | | Kind | BSA specific surface area (cm²/g) | | |
| Example 1 | N, P, K | Dihydrate gypsum | 1500 | 5 | 3 |
| Example 2 | N, P, K | Dihydrate gypsum | 5000 | 5 | 10 |
| Example 3 | N, P, K | Dihydrate gypsum | 8000 | 5 | 12 |
| Example 4 | N, P, K | Dihydrate gypsum | 15000 | 5 | 20 |
| Comparative Example | Only chemical fertilizer (N, P, K) | | | | 30 |

As shown in Table 1, the results were that each of Examples 1 to 4 where gypsum used in a gypsum fertilizer used together with the chemical fertilizer had a BSA specific surface area in a range as specified in the present invention clearly showed a smaller rate of fallen fruits, indicating that the abscission was more suppressed than Comparative Example where a gypsum fertilizer was not used. Among the Examples, Examples 1 to 3 where gypsum having a BSA specific surface area of 8000 cm²/g or less was used showed a half of or less than half the rate of fallen fruits of the case where only a chemical fertilizer was used, and thus a higher effect of preventing the abscission was recognized. Moreover, Example 1 where gypsum having a BSA specific surface area of 1500 cm²/g or less was used showed 1/10 of the rate of fallen fruits of the case where only a chemical fertilizer was used, and thus it could be confirmed that the load of producers could be much reduced and a great increase in the crop yield could be achieved. Furthermore, Comparative Example where a gypsum fertilizer containing a gypsum component as specified in the present invention was not used as a fertilizer showed that the number of born fruits was sufficient, but showed a larger rate of fallen fruits and a smaller crop yield than Examples 1 to 4. Moreover, it could be confirmed that the blueberries harvested in Examples 1 to 4 had no problem in the growth and were as good as the blueberry harvested in Comparative Example.

### Industrial Applicability

As an example of utilizing the present invention, the abscission of blueberry fruits can be suppressed, so that not only the crop yield increases but also it becomes unnecessary to collect fallen fruits frequently, and major practical effects that the increase in crop yield and the reduction in labor of producers can be achieved without deteriorating the growth of blueberries can be expected by using the present invention. Moreover, application of the technique of the present invention not only to blueberries but also to other fruits or crops which have a preference for acidic soil, for which a calcium fertilizer such as slaked lime has not been able to be used, and which requires a calcium (Ca) component can also be expected.

## Claims

1. Use of a gypsum fertilizer for suppressing abscission of blueberries, wherein the fertilizer comprises gypsum having a BSA specific surface area of 15000 cm²/g or less as a main component.

2. Use of the gypsum fertilizer according to claim 1, wherein the BSA specific surface area is 8000 cm²/g or less.

3. Use of the gypsum fertilizer according to claim 1, wherein the BSA specific surface area is 5000 cm²/g or less.

4. Use of the gypsum fertilizer according to claim 1, wherein the BSA specific surface area is 1500 cm²/g or less.

5. Use of the gypsum fertilizer according to any one of claims 1 to 4, wherein the fertilizer further comprises a material that comprises at least one component selected from the group consisting of a nitrogen component, a phosphoric acid component, a potassium component, and an iron component.

6. Use of the gypsum fertilizer according to claim 5, wherein the phosphoric acid component is at least one selected from the group consisting of orthophosphoric acid, polyphosphoric acid, phosphorous acid, and salts thereof.

7. Use of the gypsum fertilizer according to claim 5 or 6, wherein the material that comprises at least one component selected from the group consisting of a nitrogen component, a phosphoric acid component, a potassium component, and an iron component is contained in a ratio of 0.1 to 20 parts by mass based on 100 parts by mass of the gypsum.

8. Use of the gypsum fertilizer according to any one of claims 1 to 7, wherein the gypsum is phosphogypsum.

9. Use of the gypsum fertilizer according to any one of claims 1 to 8, wherein the gypsum is dihydrate gypsum.

10. A method for suppressing abscission of blueberry fruits, the method fertilizing soil with the fertilizer for blueberries as defined in any one of claims 1 to 9.

## Patentansprüche

1. Verwendung eines Gipsdüngers zur Unterdrückung der Abszission von Blaubeeren, wobei der Dünger Gips mit einer BSA-spezifischen Oberfläche von 15000 cm² / g oder weniger als Hauptbestandteil umfasst.

2. Verwendung des Gipsdüngers nach Anspruch 1, wobei die BSA-spezifische Oberfläche 8000 cm²/ g oder weniger beträgt.

3. Verwendung des Gipsdüngers nach Anspruch 1, wobei die BSA-spezifische Oberfläche 5000 cm²/ g oder weniger beträgt.

4. Verwendung des Gipsdüngers nach Anspruch 1, wobei die BSA-spezifische Oberfläche 1500 cm²/ g oder weniger beträgt.

5. Verwendung des Gipsdüngers nach einem der Ansprüche 1 bis 4, wobei der Dünger ferner ein Material umfasst, das mindestens eine Komponente ausgewählt aus der Gruppe bestehend aus einer Stickstoffkomponente, einer Phosphorsäurekomponente, einer Kaliumkomponente und einer Eisenkomponente umfasst.

6. Verwendung des Gipsdüngers nach Anspruch 5, wobei die Phosphorsäurekomponente mindestens eine ist, ausgewählt aus der Gruppe bestehend aus Orthophosphorsäure, Polyphosphorsäure, Phosphorsäure und Salzen davon.

7. Verwendung des Gipsdüngers nach Anspruch 5 oder 6, wobei das Material, das mindestens eine Komponente ausgewählt aus der Gruppe bestehend aus einer Stickstoffkomponente, einer Phosphorsäurekomponente, einer Kaliumkomponente und einer Eisenkomponente umfasst, in einem Verhältnis von 0,1 bis 20 Massenteilen, bezogen auf 100 Massenteile des Gipses, ist enthalten.

8. Verwendung des Gipsdüngers nach einem der Ansprüche 1 bis 7, wobei der Gips Phosphogips ist.

9. Verwendung des Gipsdüngers nach einem der Ansprüche 1 bis 8, wobei der Gips Dihydratgips ist.

10. Verfahren zur Unterdrückung der Abszission von Blaubeerfrüchten, wobei das Verfahren die Düngung des Bodens mit dem Dünger für Blaubeeren wie in einem der Ansprüche 1 bis 9 definiert ist.

## Revendications

1. Utilisation d'un engrais au gypse pour supprimer l'abscission des myrtilles, dans laquelle l'engrais comprend, en tant que composant principal, du gypse ayant une surface spécifique BSA de 15 000 cm²/g ou moins.

2. Utilisation d'un engrais au gypse selon la revendication 1, dans laquelle la surface spécifique BSA est de 8 000 cm²/g ou moins.

3. Utilisation d'un engrais au gypse selon la revendication 1, dans laquelle la surface spécifique BSA est de 5 000 cm²/g ou moins.

4. Utilisation d'un engrais au gypse selon la revendication 1, dans laquelle la surface spécifique BSA est de 1 500 cm²/g ou moins.

5. Utilisation d'un engrais au gypse selon l'une quelconque des revendications 1 à 4, dans laquelle l'engrais comprend en outre un matériau qui comprend au moins un composant choisi dans le groupe constitué par un composant azote, un composant acide phosphorique, un composant potassium, et un composant fer.

6. Utilisation d'un engrais au gypse selon la revendication 5, dans laquelle le composant acide phosphorique est au moins l'un choisi dans le groupe constitué par l'acide orthophosphorique, l'acide polyphosphorique, l'acide phosphoreux, et leurs sels.

7. Utilisation d'un engrais au gypse selon la revendication 5 ou 6, dans laquelle le matériau qui comprend au moins un composant choisi dans le groupe constitué par un composant azote, un composant acide phosphorique, un composant potassium, et un composant fer, est contenu en une proportion de 0,1 à 20 parties en masses basées sur 100 parties en masse du gypse.

8. Utilisation d'un engrais au gypse selon l'une quelconque des revendications 1 à 7, dans laquelle le gypse est du phosphogypse.

9. Utilisation d'un engrais au gypse selon l'une quelconque des revendications 1 à 8, dans laquelle le gypse est du gypse dihydraté.

10. Procédé pour supprimer l'abscission des myrtilles, le procédé fertilisant le sol avec l'engrais pour myrtilles tel que défini dans l'une quelconque des revendications 1 à 9.
